**Europäisches Patentamt**

**European Patent Office**

**Office européen des brevets**

(19)

(11) Veröffentlichungsnummer: **0 119 312**
A2

## (12) EUROPÄISCHE PATENTANMELDUNG

(21) Anmeldenummer: 83112625.5

(22) Anmeldetag: 15.12.83

(51) Int. Cl.³: **G 04 G 15/00,** G 04 G 9/00, G 05 D 23/19

(30) Priorität: 22.03.83 DE 3310344

(43) Veröffentlichungstag der Anmeldung: 26.09.84
Patentblatt 84/39

(84) Benannte Vertragsstaaten: **AT BE CH FR IT LI LU NL**

(71) Anmelder: **Viessmann Werke KG, Postfach 10, D-3559 Allendorf/Eder (DE)**

(72) Erfinder: **Arend, Hans-Otto, Dipl.-Ing. (FH), Schulweg 23, D-3559 Allendorf/Eder (DE)**

(74) Vertreter: **Patentanwälte Beetz sen. - Beetz jun. Timpe - Siegfried - Schmitt-Fumian, Steinsdorfstrasse 10, D-8000 München 22 (DE)**

(54) Digitale Schaltuhr.

(57) Die Erfindung betrifft digital arbeitende Schaltuhren mit einer Digital-Anzeigetafel. Die Digital-Anzeigetafel enthält neben einer Anzeige für Wochentage und einer Anzeige für Uhrzeiten mindestens eine Anzeige für Schaltprogramme, in der mit einer Zeitskala zugeordneten symbolischen Marken Zeitdiagramme in diskreten Schritten dargestellt werden. Die Schaltuhren eignen sich insbesondere für Heizungsregelsysteme.

Viessmann Werke KG

D-3559 Allendorf (Eder)

------------------------------------

Digitale Schaltuhr


Die Erfindung betrifft digitale Schaltuhren mit einer Digital-Anzeigetafel, die sich insbesondere für Heizungsregelsysteme eignen.

Um eine möglichst große Energieeinsparung zu erreichen, ist es in der Heizungstechnik üblich, den vollen Heizbetrieb nur während der eigentlichen Nutzungsphasen aufrechtzuerhalten und dazwischen Absenkphasen einzuschalten.

Bei frostfreier Witterung können noch zusätzlich Pumpen abgeschaltet werden. Um diese Funktionen zu erreichen, bedient man sich verschiedener Schaltuhren.

Große Verbreitung haben Schaltuhren mit einem analogen (runden) Zifferblatt, auf dem die Schaltzeitpunkte zum Absenken oder Aufheizen durch Schaltreiter vorgegeben werden. Zur besseren Unterscheidung von Aufheiz- und Absenkzeitpunkten können die entsprechenden Schaltreiter unterschiedliche Farben besitzen.

0119312

Durch die Drehrichtung der Programmscheibe, die aufgedruckten Uhrzeiten und die Reihenfolge der Schaltreiter kann man relativ leicht auf einen Blick die Heizperioden erkennen. Üblicherweise besitzen derartige Schaltuhren Tagesscheiben, umfassen also nur ein jeweils gleiches Tagesprogramm.

Es sind jedoch auch Schaltuhren mit Wochenscheibe bekannt, bei denen die runde Scheibe in sieben gleiche Segmente unterteilt ist. Die Schaltreiter werden tagesspezifisch auf diese Scheibe gesteckt, so daß die Schaltperioden ebenfalls leicht erkennbar sind.

Bei den digital arbeitenden Schaltuhren ist grundsätzlich von Nachteil, daß man im Gegensatz zu analog arbeitenden Uhren mit Zifferblatt die Uhrzeit ohne den Zusammenhang eines Zeitraums sieht, wodurch die Zuordnung der Uhrzeit zu einem Zeitprogramm erheblich erschwert wird.

Bei Schaltuhren, bei denen mehrere Heizperioden pro Tag für sieben verschiedene Wochentage einstellbar sind, ist es besonders schwierig, die einzelnen Schaltperioden zu überblicken.

Zur Veranschaulichung wird in diesen Fällen in der Regel ein Zeitdiagramm gezeichnet und in der Nähe der Schaltuhr angebracht.

Die Akzeptanz und Marktdurchdringung solcher digital arbeitenden Schaltuhren hängt jedoch in hohem Maße von ihrer Bedienbarkeit durch Laien ab, insbesondere von der Leichtigkeit der vorzunehmenden Einstellungen und der Übersichtlichkeit der eingestellten Schaltzeitperioden.

Der Erfindung liegt entsprechend die Aufgabe zugrunde, eine digital arbeitende Schaltuhr mit einer Schaltperiodenanzeige anzugeben, bei der ohne zusätzliche externe Maßnahmen eine automatische und direkte Zuordnung der Schaltprogramme zum Wochentag und zur Uhrzeit gegeben und der Überblick über die Schaltprogramme verbessert ist.

Die Aufgabe wird anspruchsgemäß gelöst.

Vorteilhafte Ausgestaltungen sind Gegenstand der Unteransprüche.

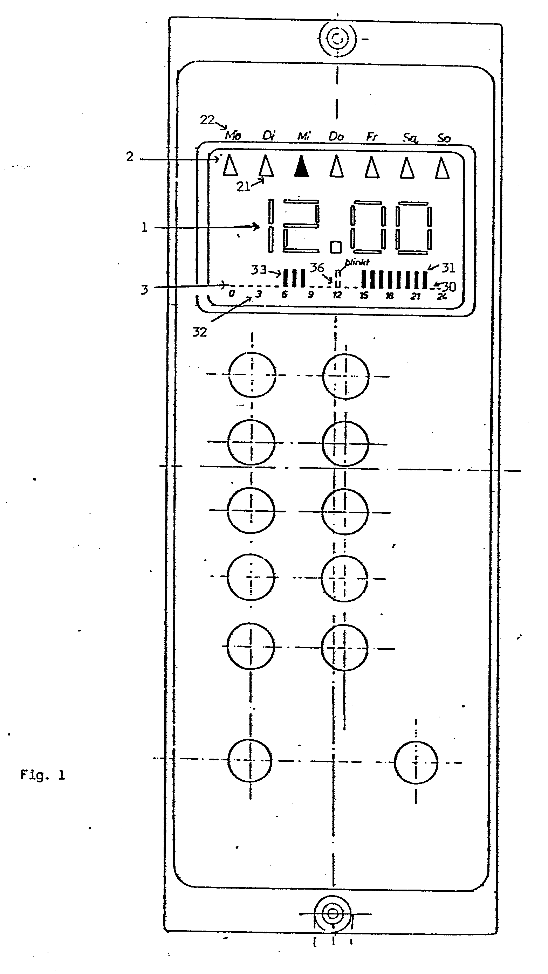

Die Erfindung wird im folgenden anhand von Ausführungsbeispielen unter Bezug auf die Zeichnung näher beschrieben. Die Figuren 1 bis 5 zeigen jeweils ein Ausführungsbeispiel der Erfindung, wobei die Digital-Anzeigetafel als konstruktive Einheit mit einer Tastatur in Frontansicht dargestellt ist.

Es zeigen:

Fig. 1: Eine erste Ausführungsart der erfindungsgemäßen digitalen Schaltuhr, wobei folgendes Schaltprogramm dargestellt ist: Heizen 6 Uhr bis 8 Uhr und 15 Uhr bis 22 Uhr;

Fig. 2: eine zweite Ausführungsart der erfindungsgemäßen digitalen Schaltuhr;

Fig. 3: eine dritte Ausführungsart der erfindungsgemäßen digitalen Schaltuhr, wobei dasselbe Schaltprogramm wie in Fig. 1 in runder Darstellung angezeigt wird;

Fig. 4: eine vierte Ausführungsart der erfindungsgemäßen digitalen Schaltuhr, wobei dasselbe Schaltprogramm wie in Fig. 1 dargestellt ist;
und

Fig. 5: eine fünfte Ausführungsart der erfindungsgemäßen
digitalen Schaltuhr, wobei das dargestellte Schaltprogramm dauerndes Absenken bedeutet.

Das in Fig. 1 dargestellte erste Ausführungsbeispiel zeigt
eine im wesentlichen rechteckige, im oberen Teil einer rechteckigen Frontplatte, oberhalb einer Tastatur angeordnete Digital-
Anzeigetafel. Von oben nach unten weist diese Digital-Anzeigetafel folgende Elemente auf:

Eine waagrechte Digitalanzeige für Wochentage 2 in Form von
dreieckigen Marken 21 mit diesen Marken zugeordneten Wochentagsymbolen 22, die außerhalb der Anzeigetafel auf der Frontplatte
aufgedruckt sind. Eine dunkel gezeichnete Marke bedeutet die
Anzeige des jeweiligen Wochentags.

Darunter befindet sich eine Anzeige 1 für die Uhrzeit in
Form einer 4-ziffrigen Siebensegmentanzeige.

Eine weitere Komponente der Digital-Anzeigetafel ist eine
unterhalb der Uhrzeitanzeige angeordnete Anzeige 3 für Schaltprogramme. Bei diesem Ausführungsbeispiel ist die Anzeige für
Schaltprogramme in Form einer geradlinigen Zeitskala 32 von
0 bis 24 h, die in m Schritte unterteilt ist, gestaltet,
bei der maximal m streifenförmige Marken 33 jeweils eine von
zwei digitalen Schaltzuständen 20, 31 anzeigen. Die Zeitskala
von 0 bis 24 h kann dabei in Stunden-, Halbstunden-, Viertelstunden- oder 10-Minuten-Schritte unterteilt sein, woraus sich
die jeweilige Zahl zu $m = 24$, $m = 48$, $m = 96$ oder $m = 144$ ergibt.
Bevorzugt werden $m = 24$ oder $m = 96$ Schritte verwendet. Bei diesem Ausführungsbeispiel ergibt eine blinkende Marke die Zuordnung zur gerade angezeigten Uhrzeit. Das in der Anzeigetafel von Fig. 1 beispielhaft dargestellte Zeitdiagramm umfaßt Absenkphasen von 22 bis 6 Uhr sowie von 8 bis 15 Uhr; dazwischen liegen normale Heizphasen.

Die Digital-Anzeigetafel dieses Ausführungsbeispiels ermöglicht dementsprechend eine übersichtliche, direkte und automatische Zuordnung des Schaltprogramms sowohl zum Wochentag als auch zur Uhrzeit.

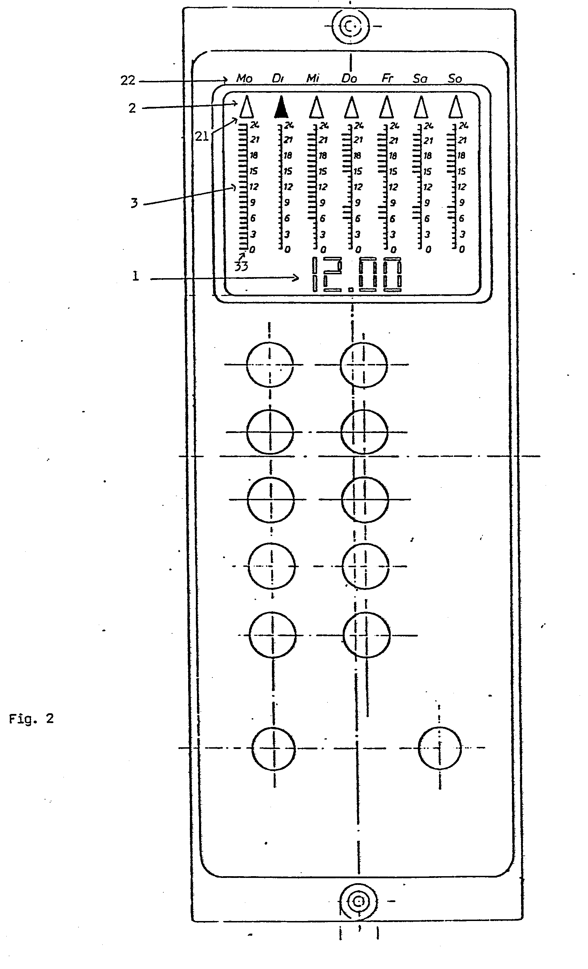

Bei dem in Fig. 2 dargestellten weiteren Ausführungsbeispiel ist nicht nur wie beim vorigen Ausführungsbeispiel eine digitale Darstellung des Schaltprogramms eines Tages, sondern jedes einzelnen Wochentags möglich, da sieben unabhängige, je einem Wochentag zugeordnete, geradlinige, diskrete Schritte aufweisende Zeitskalen vorgesehen sind. Die Zeitskalen sind dabei jeweils in senkrechter Richtung direkt unter der jeweiligen dreieckigen Marke für den Wochentag angezeigt. Die Anzeige $\underline{3}$ für die sieben Schaltprogramme umfaßt wiederum jeweils 24 h, wobei die Schaltzustände wieder in Form von streifenförmigen, diskreten Marken angezeigt werden. Die Anzahl der diskreten Schritte beträgt bevorzugt k = 24 oder 96.

Die Anzeige für die Uhrzeit $\underline{1}$ ist ebenfalls eine 4-ziffrige Siebensegmentanzeige am unteren Rand der Digital-Anzeigetafel.

Bei dieser Ausführungsform hat der Benutzer somit einen Überblick über das gesamte innerhalb einer Woche ablaufende Schaltprogramm.

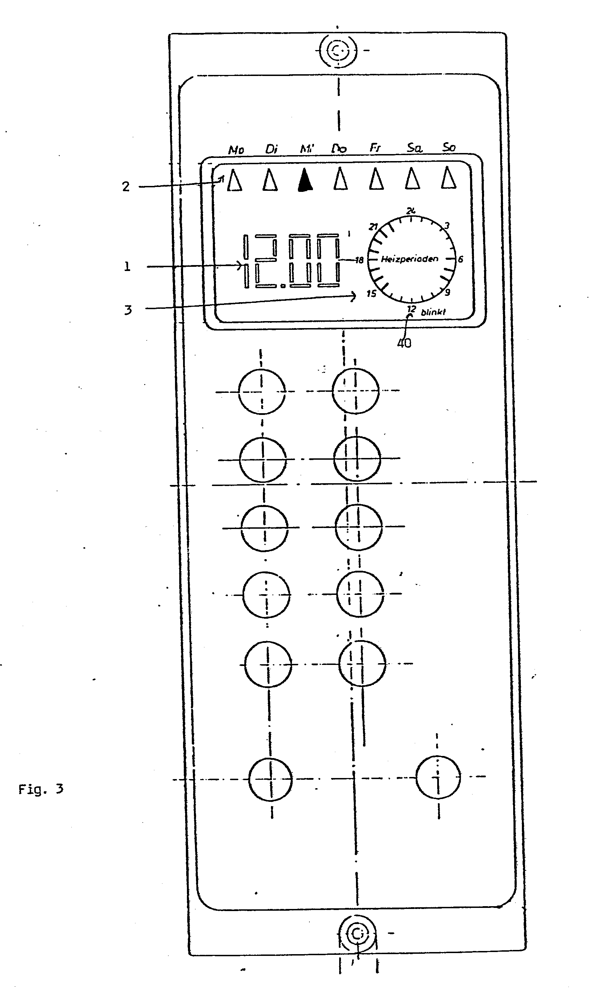

Fig. 3 zeigt ein drittes Ausführungsbeispiel, bei dem die Anzeige $\underline{3}$ für die Schaltprogramme als kreisförmiges 24-Stunden-Uhrzifferblatt $\underline{40}$ ausgebildet ist.

Auch hier kann die Anzeige für Schaltprogramme in Stunden-, Halbstunden-, Viertelstunden- oder 10-Minuten-Schritte eingeteilt sein. Bevorzugt werden k = 24 oder k = 96 Schritte.

Durch eine blinkende Marke ist auch hier eine Zuordnung zur angezeigten Uhrzeit möglich. Die Anzeige 1 für Uhrzeiten befindet sich neben der Anzeige 3 für Schaltprogramme.

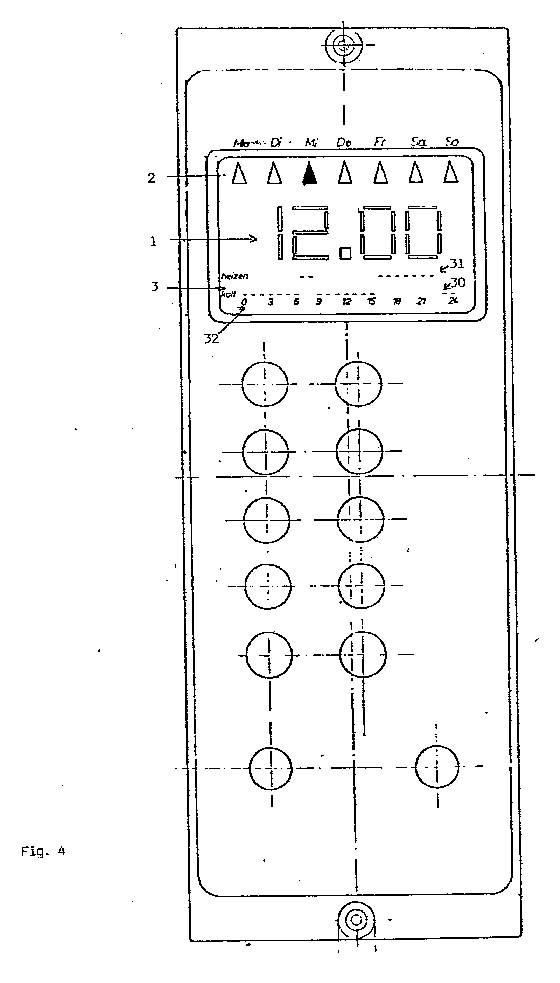

Bei dem in Fig. 4 dargestellten vierten Ausführungsbeispiel ist die Anzeige für Wochentage 2 und Uhrzeiten 1 ebenso wie beim ersten Ausführungsbeispiel von Fig. 1 gestaltet.

Die Anzeige 3 für Schaltprogramme enthält der von 0 bis 24 h gehenden Zeitskala 32 zugeordnete, die Schaltzustände anzeigende Strichlinien, die auf jeweils einer von mindestens zwei höhenmäßig unterschiedlichen Anzeigestufen 30, 31 erscheinen. Die Länge der in Richtung der Zeitskala liegenden Strichlinien ist gleich groß oder etwas kleiner als die Schrittlänge der Zeitskala. Die Anzahl der Schritte ist bevorzugt k = 24 oder k = 96. Die Digital-Anzeigetafel ist sonst wie in Fig. 1 gestaltet.

Auch hier ist wie bei den vorangehend beschriebenen Ausführungsbeispielen eine direkte und automatische Zuordnung des angezeigten Schaltprogramms zum Wochentag und zur Uhrzeit möglich.

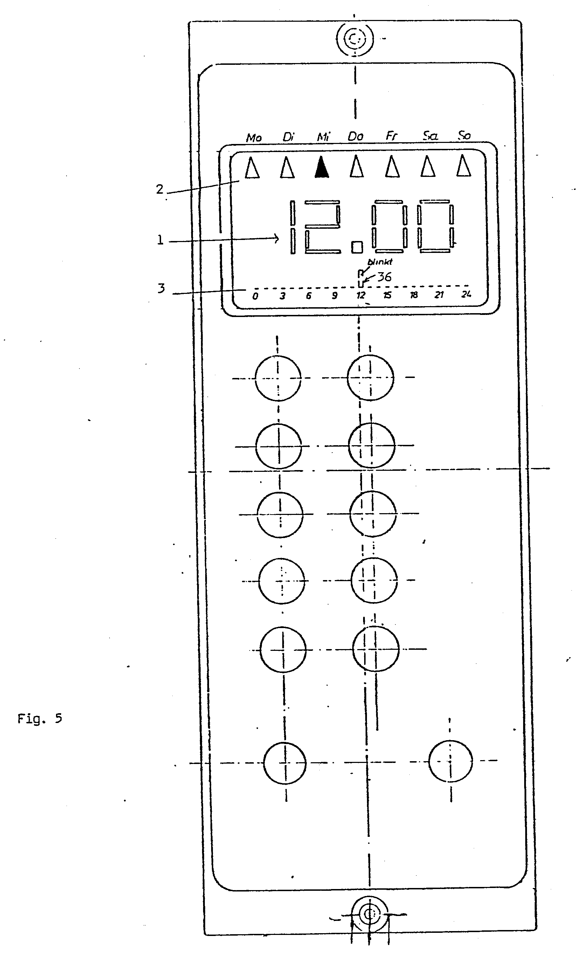

Das Ausführungsbeispiel von Fig. 5 zeigt eine bevorzugte Weiterbildung, bei der eine blinkende Marke den zur angezeigten Uhrzeit vorliegenden Schaltzustand angibt.

Die erfindungsgemäße Digital-Anzeigetafel kann nicht nur zur Anzeige des Wochentags, der Uhrzeit und des ablaufenden Schaltprogramms verwendet werden, sondern auch zur Programmierung und Anzeige der mit Hilfe der darunter dargestellten Tastatur einprogrammierbaren Informationen bezüglich Wochentag, Uhrzeit und Schaltprogramm. Ebenso kann die eingespeicherte Information über die Tastatur abgefragt und an der Digital-Anzeigetafel angezeigt werden.

Die Ansteuerung der Digital-Anzeigetafel kann mit Hilfe bekannter Techniken, zB im Zeitmultiplexbetrieb unter Verwendung einer programmierten oder festverdrahteten Anzeigesteuerungseinrichtung erfolgen. Dabei ist es möglich, daß die Anzeigeinformation aus einem Schreib/Lese-Speicher (RAM) ausgelesen wird. Zum Fortschreiben bzw Ändern der Anzeigeinformation werden dann über die Tastatur entsprechende Daten eingegeben und im Speicher eingespeichert.

Bei den angeführten Ausführungsbeispielen ist für die Anzeige der Schaltprogramme nur eine Anzeige in zwei digitalen Anzeigestufen dargestellt. Im Rahmen des Erfindungskonzepts kann die Anzeige jedoch auch in mehr als zwei Stufen erfolgen, so daß sich auch mehr als zwei Schalt- oder Betriebszustände darstellen lassen. Außerdem können die Schaltstufen invertiert dargestellt sein.

Es sind beliebige Digital-Displays anwendbar (LCD, LED usw).

Vorzugsweise werden LCD-Displays verwendet, wobei die Anzeige sowohl dunkel auf hellem Untergrund als auch hell auf dunklem Untergrund sein kann. Es sind auch farbige Anzeigen, besonders farbige LCD's möglich.

Die Auflösung bzw Anzahl der Schritte der Zeitskala kann ferner den jeweiligen Erfordernissen angepaßt werden.

Durch die erfindungsgemäße Anzeige der Schaltprogramme wird bei digital arbeitenden Schaltuhren der wesentliche Vorteil erzielt, daß eine übersichtliche Zuordnung von Schaltprogrammen, Wochentagen und Uhrzeit ermöglicht wird. Dieser Vorteil besteht nicht nur für die Überwachung des jeweils ablaufenden Schaltprogramms, sondern auch bei der Programmierung und Änderung sowie der Abfrage der Schaltprogramme. Durch die erfindungsgemäßen digitalen Schaltuhren werden für die Benutzer, die ja in der Regel keine Fachleute sind, Überwachung und Programmierung der Heizanlage entsprechend erheblich erleichtert.

0119312

Ansprüche

1. Digitale Schaltuhr mit einer Digital-Anzeigetafel, die umfaßt:

- eine erste Digitalanzeige für Uhrzeiten und
- eine zweite Digitalanzeige für Wochentage,

gekennzeichnet durch

eine dritte Digitalanzeige (3) für Schaltprogramme, die diese als Zeitdiagramm über mindestens 24 h in Form einer n diskrete Schritte enthaltenden Zeitskala (32) jeweils in mindestens zwei Schaltzuständen entsprechenden Anzeigestufen (30, 31) anzeigt.

2. Digitale Schaltuhr nach Anspruch 1,

dadurch gekennzeichnet, daß

- die erste Digitalanzeige (1) die Uhrzeit über 24 h anzeigt und in Form einer 4-ziffrigen Siebensegment-Anzeige gestaltet ist,

- die zweite Digitalanzeige (2) sieben geradlinig ausgerichtete dreieckförmige Marken (21) aufweist, die auf den jeweiligen Wochentag weisen, wobei die Wochentage in Form einer geradlinigen, den dreieckigen Marken zugeordneten Skala (22) außerhalb der Digital-Anzeigetafel angegeben sind,

- die dritte Digitalanzeige (3) umfaßt:

  - eine geradlinige Zeitskala (32) von 0 bis 24 h, die in m Schritte unterteilt ist, mit $m \leq n$ (m, n ganzzahlig), und

- maximal m streifenförmige Marken (33), die jeweils eine von zwei digitalen Schaltzuständen (30, 31) anzeigen (Fig. 1).

3. Digitale Schaltuhr nach Anspruch 1 oder 2,

dadurch gekennzeichnet, daß

die dritte Digitalanzeige (3) für jeden Wochentag eine diesem örtlich zugeordnete, geradlinige, k diskrete Schritte aufweisende Zeitskala umfaßt, mit $k \leq n$ (k ganzzahlig) (Fig. 2).

4. Digitale Schaltuhr nach Anspruch 1 oder 2,

dadurch gekennzeichnet, daß

die dritte Digitalanzeige (3) eine kreisförmige Zeitskala (40) von 0 bis 24 h aufweist (Fig. 3).

5. Digitale Schaltuhr nach Anspruch 1 oder 2,

dadurch gekennzeichnet, daß

die dritte Digitalanzeige (3) Marken für die Schaltstufen in Form von Strichlinien in Richtung der Zeitskala aufweist, die gleich lang oder etwas kürzer als die Schrittlänge sind und auf jeweils einer von mindestens zwei Schaltzuständen anzeigbar sind (Fig. 4).

6. Digitale Schaltuhr nach einem der vorangehenden Ansprüche,

dadurch gekennzeichnet, daß

die dritte Digitalanzeige (3) eine Zuordnungsanzeige (36) enthält, die einen der n Schritte der Zeitskala der angezeigten Uhrzeit zuordnet (Fig. 5).

7. Digitale Schaltuhr nach Anspruch 6,

gekennzeichnet durch eine von der Zeitskala unabhängige Zuordnungsanzeige in Form eines blinkenden Symbols.

8. Digitale Schaltuhr nach Anspruch 6,

dadurch gekennzeichnet, daß

die der jeweiligen Uhrzeit entsprechende Marke (36) der ggf
einem Wochentag zugeordneten dritten Digitalanzeige (3) blinkt.

9. Digitale Schaltuhr nach einem der Ansprüche 1 bis 8, gekennzeichnet durch n, m bzw k = 24.

10. Digitale Schaltuhr nach einem der Ansprüche 1 bis 8, gekennzeichnet durch n, m bzw k = 96.

11. Digitale Schaltuhr nach einem der Ansprüche 1 bis 10, gekennzeichnet durch eine Digital-Anzeigetafel auf Flüssigkristallbasis (LCD).

12. Digitale Schaltuhr nach einem der Ansprüche 1 bis 11,

dadurch gekennzeichnet, daß

die dreieckförmigen Marken (21) der zweiten Digitalanzeige (2)
am oberen Rand der Digital-Anzeigetafel waagrecht mit gleichen
Abständen angeordnet sind.

13. Digitale Schaltuhr nach Anspruch 1, 2 und 12,

dadurch gekennzeichnet, daß

die erste Digitalanzeige (1) in der Mitte der Digital-Anzeigetafel unterhalb der zweiten Digital-Anzeige,

die dritte Digitalanzeige (3) am unteren Rand der Digital-
Anzeigetafel unterhalb der ersten Digitalanzeige waagrecht
angeordnet sind.

und die streifenförmigen Marken (33) senkrecht oberhalb der
Zeitskala (32) angezeigt werden (Fig. 1).

0119312

14. Digitale Schaltuhr nach Anspruch 1, 3 und 12,

dadurch gekennzeichnet, daß

die erste Digitalanzeige (1) am unteren Rand der Digital-Anzeigetafel,

die dritte Digitalanzeige (3) in der Mitte der Digital-Anzeigetafel

und die den Wochentagen zugeordneten einzelnen Zeitskalen senkrecht nebeneinander in der Reihenfolge der Wochentage und mit dem gleichen gegenseitigen Abstand angeordnet sind, wobei die streifenförmigen Marken (33) waagrecht jeweils parallel zur jeweiligen Zeitskala angezeigt werden (Fig. 2).

15. Digitale Schaltuhr nach Anspruch 1, 4 und 12,

dadurch gekennzeichnet, daß

die erste und dritte Digitalanzeige (1, 3) nebeneinander unter der zweiten Digitalanzeige (2) angeordnet sind.

16. Digitale Schaltuhr nach Anspruch 1, 5 und 12,

dadurch gekennzeichnet, daß

die erste Digitalanzeige (1) in der Mitte der Digital-Anzeigetafel

und die dritte Digitalanzeige (3) unterhalb der ersten Digitalanzeige (1) am unteren Rand der Digital-Anzeigetafel waagrecht angeordnet sind.

Fig. 1

0119312

1/5

0119312

2/5

Fig. 2

Fig. 3

0119312

Fig. 4

5 15

Fig. 5